# EUROPÄISCHE PATENTSCHRIFT

(11) **EP 2 780 125 B1**
(45) Veröffentlichungstag und Bekanntmachung des Hinweises auf die Patenterteilung: **05.04.2017**
(21) Anmeldenummer: 12784527.9
(22) Anmeldetag: 24.10.2012
(51) Int. Cl.: B06B 1/02, G01S 7/523

(54) **ULTRASCHALLWANDLER UND KORRESPONDIERENDE VORRICHTUNG ZUR UMFELDERFASSUNG IN EINEM FAHRZEUG**
ULTRASOUND TRANSDUCER AND CORRESPONDING APPARATUS FOR MONITORING VEHICLE SURROUNDINGS
TRANSDUCTEUR ULTRASONIQUE ET DISPOSITIF CORRESPONDANT DE SURVEILLANCE DE L'ENVIRONNEMENT D'UN VÉHICULE

(30) Priorität: 15.11.2011 DE 102011118644
(43) Veröffentlichungstag der Anmeldung: 24.09.2014
(73) Patentinhaber: Valeo Schalter und Sensoren GmbH, 74321 Bietigheim-Bissingen (DE)
(72) Erfinder: LILL, Anton, 74348 Lauffen am Neckar (DE)
(86) Internationale Anmeldenummer: PCT/EP2012/071010
(87) Internationale Veröffentlichungsnummer: WO 2013/072167

(56) Entgegenhaltungen:
- EP-A1- 2 312 572
- DE-A1-102006 054 095
- DE-A1-102008 061 963
- US-A1- 2004 226 378

## Beschreibung

Die Erfindung betrifft einen Ultraschallwandler der im Oberbegriff des Anspruchs 1 genannten Art sowie eine korrespondierende Vorrichtung zur Umfelderfassung in einem Fahrzeug.

Aus dem Stand der Technik sind Ultraschallwandler zur Umfelderfassung in Fahrzeugen bekannt (siehe z.B. US 2004/0226378 A1), welche Piezo-Elemente umfassen, welche jeweils mit einer Wechselspannung von ca. 50 bis 100Vₚₚ und einer Frequenz von ca. 30 bis 60kHz angesteuert werden müssen. Zur Erzeugung dieser Wechselspannung wird in der Regel ein Gegentakttransformator verwendet, dessen beide Primärwicklungen von Schaltern in einer anwendungsspezifischen integrierten Schaltung (ASIC: Application-Specific Integrated Circuit) abwechselnd an eine Versorgungsspannung geschaltet werden. An der Sekundärspule kann dann die hoch transformierte Spannung für das Piezo-Element abgegriffen werden. Als nachteilig kann bei dieser Anordnung angesehen werden, dass der Gegentakttransformator einen Großteil des zur Verfügung stehenden Raumes auf einer korrespondierenden Leiterplatte einnimmt. Zudem ergeben sich für den Gegentakttransformator vergleichsweise hohe Kosten.

In der Offenlegungsschrift DE 10 2008 061 963 A1 wird ein bipolarer DC/DC-Wandler zum Bereitstellen einer Ausgangsspannung mit wahlfreier Polarität basierend auf einer Eingangsgleichspannung vorgeschlagen. Die beschriebene Wandlerschaltung umfasst einen Eingang und einen Ausgang und verwendet statt des Gegentakttransformators eine wesentlich kleinere und preisgünstigere Drosselspule. Des Weiteren ist eine erste Schalteinrichtung vorgesehen, um einen ersten Anschluss und einen zweiten Anschluss der Drosselspule wahlfrei mit dem Eingang zu verbinden. Eine zweite Schalteinrichtung ist vorgesehen, um einen der Anschlüsse der Drosselspule mit dem Ausgang zu verbinden. Durch die besondere Art der Ansteuerung der Schalteinrichtungen ergibt sich am Ausgang eine Gleichspannung mit einer gewünschten Amplitude und Polarität. Die beschriebene Wandlerschaltung kann beispielsweise als Ansteuerschaltung für einen piezokeramischen Aktuator verwendet werden. Solche Aktuatoren stellen kapazitive Lasten dar, welche je nach Anwendung abwechselnd mit Spannungen im positiven Bereich zwischen 0 und 1,5kV, und im negativen Bereich zwischen 0 und -500V angesteuert werden.

Bei der Anwendung einer solchen Wandlerschaltung in einem Ultraschallwandler entsteht durch den Entfall des Gegentakttransformators das Problem, dass natürlich auch die Sekundärinduktivität des Gegentakttransformators nicht mehr vorhanden ist, so dass es Probleme mit der Ausschwingzeit des Piezo-Elements während des Empfangs der Echosignale geben kann. Unter "Ausschwingzeit" des Piezo-Elements wird eine Zeitdauer verstanden, in welcher die Amplitude des Sendesignals unter einen vorgegebenen Schwellwert abklingt. Empfangene Signale, deren Amplituden gleich oder kleiner als dieser Schwellwert sind, werden nicht als Echosignal erkannt. Empfangene Signale, deren Amplituden größer als der vorgegebene Schwellwert sind, werden dagegen als Echosignal erkannt und ausgewertet. Die Ausschwingzeit ist ein Maß für den kürzesten messbaren Abstand. Trifft das Echosignal innerhalb der Ausschwingzeit ein, so kann der Ultraschallwandler das Echosignal nicht erkennen, da der Schwellwert bereits durch die Amplitude des Sendesignals überschritten wird. Deshalb ist es wichtig, die Ausschwingzeit so gering wie möglich zu halten.

Aufgabe der Erfindung ist es, einen Ultraschallwandler und eine Vorrichtung zur Umfelderfassung in einem Fahrzeug vorzuschlagen, welche zur Erzeugung der Wechselspannung für ein Piezo-Element einen Schaltregler mit einer Drosselspule und keinen Gegentakttransformator verwendet und die oben genannten Probleme vermeidet.

Diese Aufgabe wird erfindungsgemäß durch einen Ultraschallwandler mit den Merkmalen des Anspruchs 1 und durch eine Vorrichtung zur Umfelderfassung in einem Fahrzeug mit den Merkmalen des Anspruchs 10 gelöst. Weitere die Ausführungsformen der Erfindung in vorteilhafter Weise ausgestaltende Merkmale enthalten die Unteransprüche.

Der mit der Erfindung erzielte Vorteil besteht darin, dass parallel zum Piezo-Element eine Kompensationsinduktivität für einen Empfangsbetrieb angeordnet ist, um einen Ultraschallwandler mit einem Schaltregler zur Verfügung zu stellen, welcher eine Drosselspule und keinen Transformator zur Erzeugung der Wechselspannung für das Piezo-Element umfasst. Durch die Kompensationsinduktivität können in vorteilhafter Weise parasitäre Kapazitäten des Piezo-Elements kompensiert werden und die Ausschwingzeiten eines Ultraschallwandlers mit Gegentakttransformator erreicht werden. Zudem ist ein Empfangsverstärker vorgesehen, welcher ein in Reaktion auf das Messsignal empfangenes Echosignal verstärkt und als Ausgangssignal ausgibt.

Der Grundgedanke der Erfindung basiert darauf, dass der Gegentakttransformator im Ultraschallwandler durch eine Drosselspule mit Umschalteinheiten ersetzt wird und eine zusätzliche Kompensationsinduktivität parallel zum Piezo-Element geschaltet wird, um die erforderlichen Ausschwingzeiten im Empfangsbetrieb zu gewährleisten.

Ähnlich einem Schaltregler wird die Drosselspule mit einer wesentlich höheren Frequenz getaktet. Dadurch kann für die Drosselspule ein kleinerer Kern als für den Gegentakttransformator zum Einsatz gelangen. Die Ansteuerspannung kann auf einfache Weise durch Ändern des Puls-Pausen-Verhältnisses der verwendeten Taktsignale eingestellt werden. Ein weiterer Vorteil besteht darin, dass durch die hohe Taktfrequenz ein wesentlich kleinerer Glättungskondensator für die Spannungsversorgung eingesetzt werden kann.

Ein erfindungsgemäßer Ultraschallwandler umfasst ein Piezo-Element und einen Schaltregler zur Erzeugung einer Ansteuerspannung für das Piezo-Element, welches in Abhängigkeit von der Ansteuerspannung ein Messsignal erzeugt und abstrahlt, wobei der Schaltregler eine Spannungsversorgung, eine Auswerte- und Steuereinheit, zwei Umschalteinheiten und eine Drosselspule umfasst, wobei über die Umschalteinheiten entweder die Spannungsversorgung oder das Piezo-Element mit der Drosselspule verbunden ist. Erfindungsgemäß ist parallel zum Piezo-Element eine Kompensationsinduktivität für einen Empfangsbetrieb angeordnet, wobei ein Empfangsverstärker ein in Reaktion auf das Messsignal empfangenes Echosignal verstärkt und ausgibt.

Ausführungsformen einer Vorrichtung zur Umfelderfassung in einem Fahrzeug umfassen mindestens einen erfindungsgemäßen Ultraschallwandler und eine Auswerteeinheit. Hierbei sendet der mindestens eine Ultraschallwandler ein Messsignal aus und empfängt in Reaktion auf das Messsignal mindestens ein Echosignal, welches die Auswerteeinheit zur Objekterkennung auswertet.

In vorteilhafter Ausgestaltung des erfindungsgemäßen Ultraschallwandlers kann die Kompensationsinduktivität beispielsweise als Spule ausgeführt werden, welche einen erforderlichen Induktivitätswert zur Kompensation der parasitären Kapazitäten im Piezo-Element zur Verfügung stellt. Damit werden aber die Vorteile, die der Entfall des Gegentakttransformators bringt, teilweise wieder vernichtet.

Daher kann die Kompensationsinduktivität in alternativer besonders vorteilhafter Ausgestaltung als Gyratoreinheit ausgeführt werden, welche einen erforderlichen Induktivitätswert zur Kompensation der parasitären Kapazitäten im Piezo-Element aus einer Bezugskapazität nachbildet. Zu diesem Zweck kann die Gyratoreinheit einen negativen Impedanzkonverter mit zwei äußeren ohmschen Widerständen und einer Bezugskapazität umfassen, deren Wert der negative Impedanzkonverter durch Phasenverschiebung in einen korrespondierenden Induktivitätswert umwandelt.

In weiterer vorteilhafter Ausgestaltung des erfindungsgemäßen Ultraschallwandlers können die Umschalteinheiten jeweils als Halbleiterschaltung mit zwei Schalttransistoren ausgeführt werden, beispielsweise mit bipolaren Schalttransistoren und/oder mit Feldeffekttransistoren.

In weiterer vorteilhafter Ausgestaltung des erfindungsgemäßen Ultraschallwandlers kann eine Logikeinheit durch Umschalten der beiden Umschalteinheiten die Drosselspule an einem ersten Anschluss mit einer Versorgungsspannung und an einem zweiten Anschluss mit Masse verbinden, um Energie in der Drosselspule zu speichern. Um das Piezo-Element mit einer positiven Ansteuerspannung zu versorgen, kann die Logikeinheit eine erste Umschalteinheit nach dem Energiespeichervorgang wieder in die Ausgangsposition umschalten. Alternativ kann die Logikeinheit eine zweite Umschalteinheit nach dem Energiespeichervorgang wieder in die Ausgangsposition umschalten, um das Piezo-Element mit einer negativen Ansteuerspannung zu versorgen. Zur Erzeugung des gewünschten Wechselsignals als Ansteuerspannung für das Piezo-Element kann die Logikeinheit zur Erzeugung eines positiven Spannungsanteils der Ansteuerspannung die erste Umschalteinheit mit einem ersten Taktsignal ansteuern. Zur Erzeugung eines negativen Spannungsanteils der Ansteuerspannung kann die Logikeinheit die zweite Umschalteinheit mit einem zweiten Taktsignal ansteuern.

In weiterer vorteilhafter Ausgestaltung des erfindungsgemäßen Ultraschallwandlers kann die Logikeinheit die Höhe des positiven oder negativen Spannungsanteils der Ansteuerspannung über das Tastverhältnis der beiden Taktsignale einstellen.

Nachfolgend werden Ausführungsbeispiele der Erfindung anhand einer zeichnerischen Darstellung näher erläutert. In den Zeichnungen bezeichnen gleiche Bezugszeichen Komponenten bzw. Elemente, die gleiche bzw. analoge Funktionen ausführen.

In der Darstellung zeigt:
- Fig. 1: ein schematisches Blockdiagramm eines Ausführungsbeispiels eines erfindungsgemäßen Ultraschallwandlers.
- Fig. 2: ein schematisches Schaltbild einer Gyratoreinheit für den erfindungsgemäßen Ultraschallwandler aus Fig. 1.
- Fig. 3: ein schematisches Ersatzschaltbild eines Piezo-Elements für den erfindungsgemäßen Ultraschallwandler aus Fig. 1.
- Fig. 4: ein schematisches Schaltbild einer ersten Umschalteinheit für den erfindungsgemäßen Ultraschallwandler aus Fig. 1.
- Fig. 5: ein schematisches Schaltbild einer zweiten Umschalteinheit für den erfindungsgemäßen Ultraschallwandler aus Fig. 1.
- Fig. 6: ein schematisches Kennliniendiagramm einer Versorgungsspannung für den erfindungsgemäßen Ultraschallwandler aus Fig. 1.
- Fig. 7: ein schematisches Kennliniendiagramm einer Ansteuerspannung und eines Messsignals für den erfindungsgemäßen Ultraschallwandler aus Fig. 1.
- Fig. 8: ein schematisches Kennliniendiagramm der Ansteuerspannung für den erfindungsgemäßen Ultraschallwandler aus Fig. 1 in einer anderen zeitlichen Auflösung.
- Fig. 9: ein schematisches Kennliniendiagramm eines ersten Taktsignals zur Erzeugung der Ansteuerspannung aus Fig. 8.
- Fig. 10: ein schematisches Kennliniendiagramm eines zweiten Taktsignals zur Erzeugung der Ansteuerspannung aus Fig. 8.

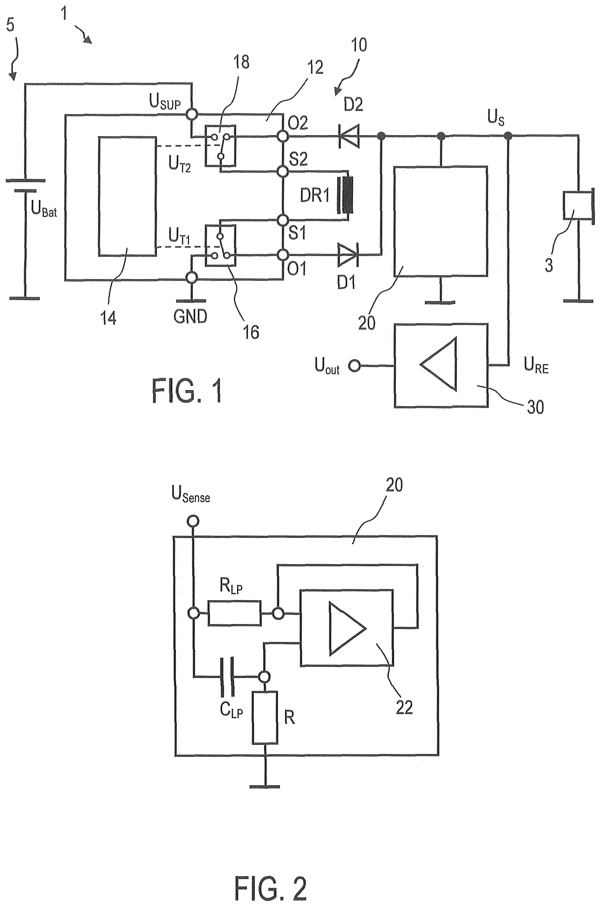

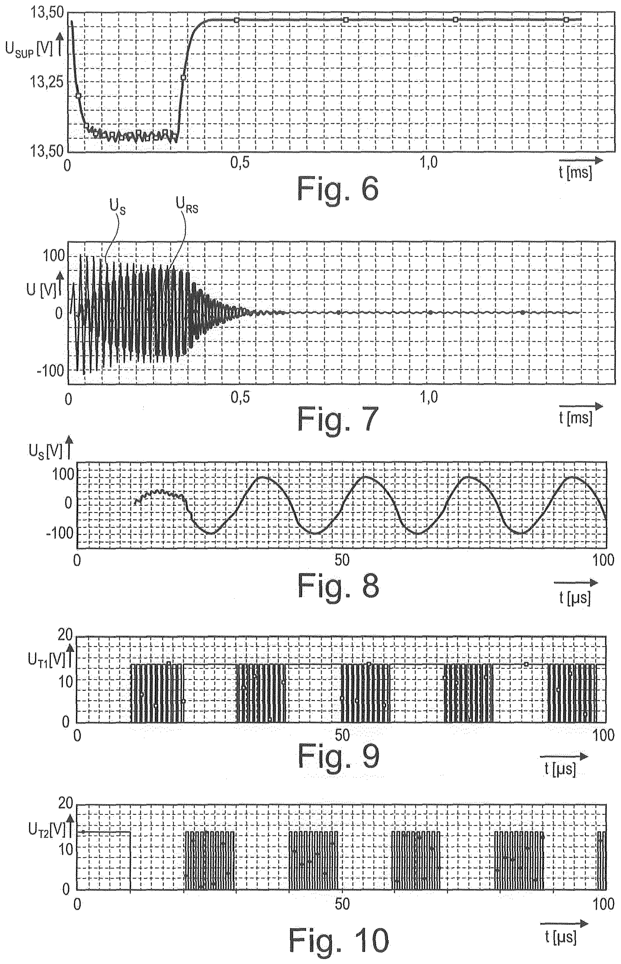

Wie aus Fig. 1 ersichtlich ist, umfasst das dargestellte Ausführungsbeispiel eines erfindungsgemäßen Ultraschallwandlers 1 ein Piezo-Element 3 und einen Schaltregler 10 zur Erzeugung einer Ansteuerspannung U_{S} für das Piezo-Element 3, welches in Abhängigkeit von der Ansteuerspannung U_{S} ein Messsignal U_{RS} erzeugt und abstrahlt, wobei der Schaltregler 10 eine Spannungsversorgung 5, eine Auswerte- und Steuereinheit 12, zwei Umschalteinheiten 16, 18 und eine Drosselspule DR1 umfasst. Des Weiteren sind zwei Dioden D1, D2 vorgesehen, an deren Kreuzungspunkt die Ansteuerspannung U_{S} bereitgestellt wird. Über die Umschalteinheiten 16, 18 kann entweder die Spannungsversorgung 5 oder das Piezo-Element 3 mit der Drosselspule DR1 verbunden werden. Im dargestellten Ausführungsbeispiel umfasst die Spannungsversorgung 5 eine Batterie, welche eine Batteriespannung U_{Bat} zur Verfügung stellt, aus welcher eine in Fig. 6 dargestellte Versorgungsspannung U_{SUP} für den Schaltregler 10 erzeugt wird.

Erfindungsgemäß ist parallel zum Piezo-Element 3 eine Kompensationsinduktivität 20 für einen Empfangsbetrieb angeordnet, wobei ein Empfangsverstärker 30 ein in Reaktion auf das Messsignal U_{RS} empfangenes Echosignal U_{RE} verstärkt und als Ausgangssignal Uₒᵤₜ ausgibt.

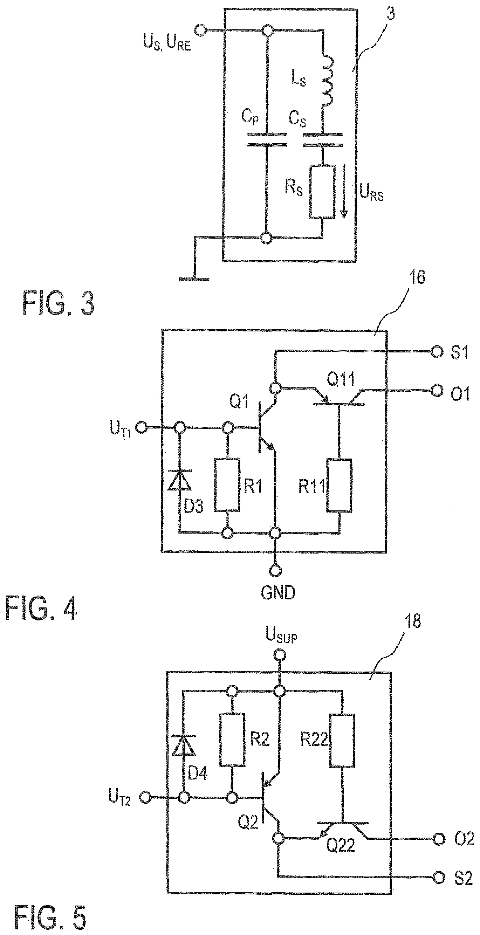

Fig. 2 zeigt eine Gyratoreinheit 20 für den erfindungsgemäßen Ultraschallwandler, Fig. 3 zeigt ein schematisches Ersatzschaltbild des Piezo-Elements 3 mit einem Reihenschwingkreis, welcher eine Längsinduktivität L_{S}, einen Längskapazität C_{S} und einen Längswiderstand R_{S} umfasst, und mit parasitären Kapazitäten, welche in einer Parallelkapazität C_{P} zusammengefasst sind, Fig. 4 zeigt die erste Umschalteinheit 16 und Fig. 5 zeigt die zweite Umschalteinheit 18 für den erfindungsgemäßen Ultraschallwandler.

Bei einer einfachen Ausführungsform der vorliegenden Erfindung kann die Kompensationsinduktivität 20 beispielsweise als Spule ausgeführt werden, welche einen erforderlichen Induktivitätswert zur Kompensation von parasitären Kapazitäten Cₚ im Piezo-Element 3 zur Verfügung stellt. Durch den Einsatz einer solchen zusätzlichen Spule werden jedoch die Vorteile, welche der Entfall des Gegentakttransformators bringt, teilweise wieder vernichtet.

Daher wird die Kompensationsinduktivität 20 vorzugsweise als Gyratoreinheit 20 ausgeführt, welche in Fig. 2 dargestellt ist. Wie aus Fig. 2 ersichtlich ist, umfasst die Gyratoreinheit 20 einen negativen Impedanzkonverter 22 mit zwei äußeren ohmschen Widerständen R_{LP}, R und einer Bezugskapazität C_{LP}, deren Wert der negative Impedanzkonverter 22 durch Phasenverschiebung in einen korrespondierenden Induktivitätswert umwandelt, der sich aus dem Produkt der beiden Werte der ohmschen Widerstände R_{LP}, R und dem Wert der Bezugskapazität C_{LP} berechnet. Somit bildet die Gyratoreinheit 20 den erforderlichen Induktivitätswert zur Kompensation von parasitären Kapazitäten C_{P} im Piezo-Element 3, dessen Ersatzschaltbild in Fig. 3 dargestellt ist, aus der Bezugskapazität C_{LP} nach.

Wie aus Fig. 4 und 5 weiter ersichtlich ist, sind die Umschalteinheiten 16, 18 jeweils als Halbleiterschaltung mit zwei Schalttransistoren Q1, Q11, Q2, Q22 ausgeführt. Eine Logikeinheit 14 des Schaltreglers 10 verbindet durch Umschalten der beiden Umschalteinheiten 16, 18 die Drosselspule DR1 an einem ersten Anschluss S2 mit der Versorgungsspannung U_{SUP} und an einem zweiten Anschluss S1 mit Masse GND, um Energie in der Drosselspule DR1 zu speichern. Die Logikeinheit 14 schaltet dann die erste Umschalteinheit 16 wieder in die Ausgangsposition um, um das Piezo-Element 3 über einen ersten Ausgabeanschluss O1 und eine erste Diode D1 mit einer positiven Ansteuerspannung U_{S} zu versorgen. Um das Piezo-Element 3 über einen zweiten Ausgabeanschluss 02 und eine zweite Diode mit einer negativen Ansteuerspannung U_{S} zu versorgen, schaltet die Logikeinheit 14 die zweite Umschalteinheit 18 wieder in die Ausgangsposition um.

Um die in Fig. 7 und 8 dargestellte Ansteuerspannung U_{S} zu erzeugen, steuert die Logikeinheit 14 zur Erzeugung eines positiven Spannungsanteils der Ansteuerspannung U_{S} die erste Umschalteinheit 16 mit einem ersten Taktsignal U_{T1} an, welches in Fig. 9 dargestellt ist. Zur Erzeugung eines negativen Spannungsanteils der Ansteuerspannung U_{S} steuert die Logikeinheit 14 die zweite Umschalteinheit 18 mit einem zweiten Taktsignal U_{T2} an, welches in Fig. 10 dargestellt ist. Über das Tastverhältnis der beiden Taktsignale U_{T1}, U_{T2} kann die Logikeinheit 14 die Höhe der positiven oder negativen Spannungsanteile der Ansteuerspannung U_{S} einstellen.

Im dargestellten Ausführungsbeispiel wird die Drosselspule DR1 mit einer wesentlich höheren Frequenz als ein vergleichbarer Gegentakttransformator getaktet. Dadurch kann für die Drosselspule DR1 ein kleinerer Kern als für den Gegentakttransformator eingesetzt werden. Die Messspannung U_{RS} kann auf einfache Weise durch Ändern des Puls-Pausen-Verhältnisses der Ansteuerung eingestellt werden. Ein weiterer Vorteil besteht darin, dass durch die hohe Taktfrequenz ein wesentlich kleinerer nicht dargestellter Glättungskondensator für die Spannungsversorgung 5 eingesetzt werden kann. Die Schalttransistoren Q1, Q11, Q2 und Q22 zur Erzeugung der Ansteuerspannung U_{S} können bei einer Realisierung des Schaltreglers 10 als anwendungsspezifische integrierte Schaltung 12 (ASIC: Application-Specific Integrated Circuit) zur besseren Kühlung außerhalb des ASICs 12 angeordnet werden. Durch den Entfall des Gegentakttransformators entsteht das Problem, dass natürlich auch die Sekundärinduktivität nicht mehr vorhanden ist. Um trotzdem die Ausschwingzeit wie bisher beizubehalten, wird erfindungsgemäß die zusätzliche Kompensationsinduktivität 20 eingesetzt.

Bei einem Einsatz in einer nicht dargestellten Vorrichtung zur Umfelderfassung in einem Fahrzeug umfasst die Spannungsversorgung 5 eine Fahrzeugbatterie, welche eine Batteriespannung U_{Bat} zur Verfügung stellt aus welcher die Versorgungsspannung U_{SUP} für den Schaltregler 10 erzeugt wird. Die Vorrichtung umfasst mindestens einen erfindungsgemäßen Ultraschallwandler 1, welcher ein Messsignal U_{RS} aussendet und in Reaktion auf das Messsignal U_{RS} mindesten ein Echosignal U_{RE} empfängt, und eine nicht dargestellte Auswerteeinheit, welche ein basierend auf dem Echosignal U_{RE} erzeugtes Ausgangssignal des mindestens einen Ultraschallwandler 1 zur Objekterkennung auswertet.

Ausführungsformen der vorliegenden Erfindung stellen in vorteilhafter einen Ultraschallwandler mit einem Schaltregler zur Verfügung, welcher eine Drosselspule und keinen Transformator zur Erzeugung der Wechselspannung für das Piezo-Element umfasst. Durch die Kompensationsinduktivität können in vorteilhafter Weise parasitäre Kapazitäten des Piezo-Elements kompensiert werden und die Ausschwingzeiten eines Ultraschallwandlers mit Gegentakttransformator erreicht werden.

## Patentansprüche

1. Ultraschallwandler mit einem Piezo-Element (3) und einem Schaltregler (10) zur Erzeugung einer Ansteuerspannung (U_{S}) als Wechselspannung für das Piezo-Element (3), welches in Abhängigkeit von der Ansteuerspannung (U_{S}) ein Messsignal (U_{RS}) erzeugt und abstrahlt, wobei der Schaltregler (10) eine Spannungsversorgung (5), eine Auswerte- und Steuereinheit (12), zwei Umschalteinheiten (16, 18) und eine Drosselspule (DR1) umfasst, wobei über die Umschalteinheiten (16, 18) entweder die Spannungsversorgung (5) oder das Piezo-Element (3) mit der Drosselspule (DR1) verbunden ist, wobei parallel zum Piezo-Element (3) eine Kompensationsinduktivität (20) für einen Empfangsbetrieb angeordnet ist, wobei ein Empfangsverstärker (30) ein in Reaktion auf das Messsignal (U_{RS}) empfangenes Echosignal (U_{RE}) verstärkt und als Ausgangssignal (Uₒᵤₜ) ausgibt.

2. Ultraschallwandler nach Anspruch 1,
**dadurch gekennzeichnet,**
**dass** die Kompensationsinduktivität (20) als Spule ausgeführt ist, welche einen erforderlichen Induktivitätswert zur Kompensation von parasitären Kapazitäten (C_{P}) im Piezo-Element (3) zur Verfügung stellt.

3. Ultraschallwandler nach Anspruch 1,
**dadurch gekennzeichnet,**
**dass** die Kompensationsinduktivität als Gyratoreinheit (20) ausgeführt ist, welche einen erforderlichen Induktivitätswert zur Kompensation von parasitären Kapazitäten (C_{P}) im Piezo-Element (3) aus einer Bezugskapazität (C_{LP}) nachbildet.

4. Ultraschallwandler nach Anspruch 3,
**dadurch gekennzeichnet,**
**dass** die Gyratoreinheit (20) einen negativen Impedanzkonverter (22) mit zwei äußeren ohmschen Widerständen (R_{LP}, R) und einer Bezugskapazität (C_{LP}) umfasst, deren Wert der negative Impedanzkonverter (22) durch Phasenverschiebung in einen korrespondierenden Induktivitätswert umwandelt.

5. Ultraschallwandler nach einem der vorherigen Ansprüche 1 bis 4,
**dadurch gekennzeichnet,**
**dass** die Umschalteinheiten (16, 18) jeweils als Halbleiterschaltung mit zwei Schalttransistoren (Q1, Q11, Q2, Q22) ausgeführt sind.

6. Ultraschallwandler nach Anspruch 5,
**dadurch gekennzeichnet,**
**dass** eine Logikeinheit (14) durch Umschalten der beiden Umschalteinheiten (16, 18) die Drosselspule (DR1) an einem ersten Anschluss (S2) mit einer Versorgungsspannung (U_{SUP}) und an einem zweiten Anschluss (S1) mit Masse (GND) verbindet, um Energie in der Drosselspule (DR1) zu speichern, wobei die Logikeinheit (14) die erste Umschalteinheit (16) wieder in die Ausgangsposition umschaltet, um das Piezo-Element (3) mit einer positiven Ansteuerspannung (U_{S}) zu versorgen oder die zweite Umschalteinheit (18) wieder in die Ausgangsposition umschaltet, um das Piezo-Element (3) mit einer negativen Ansteuerspannung (U_{S}) zu versorgen.

7. Ultraschallwandler nach Anspruch 6,
**dadurch gekennzeichnet,**
**dass** die Logikeinheit (14) zur Erzeugung eines positiven Spannungsanteils der Ansteuerspannung (U_{S}) die erste Umschalteinheit (16) mit einem ersten Taktsignal (U_{T1}) ansteuert.

8. Ultraschallwandler nach Anspruch 6,
**dadurch gekennzeichnet,**
**dass** die Logikeinheit (14) zur Erzeugung eines negativen Spannungsanteils der Ansteuerspannung (U_{S}) die zweite Umschalteinheit (18) mit einem zweiten Taktsignal (U_{T2}) ansteuert.

9. Ultraschallwandler nach Anspruch 7 oder 8,
**dadurch gekennzeichnet,**
**dass** die Logikeinheit (14) die Höhe des negativen oder positiven Spannungsanteils der Ansteuerspannung (U_{S}) über das Tastverhältnis der beiden Taktsignale (U_{T1}, U_{T2}) einstellt.

10. Vorrichtung zur Umfelderfassung in einem Fahrzeug mit mindestens einem Ultraschallwandler (1) und einer Auswerteeinheit, wobei der mindestens eine Ultraschallwandler (1) ein Messsignal (U_{RS}) aussendet und in Reaktion auf das Messsignal (U_{RS}) mindestens ein Echosignal (U_{RE}) empfängt, welches die Auswerteeinheit zur Objekterkennung auswertet,
**dadurch gekennzeichnet,**
**dass** der Ultraschallwandler (1) nach einem der Ansprüche 1 bis 9 ausgeführt ist.

## Claims

1. Ultrasonic transducer having a piezo element (3) and a switching regulator (10) for generating a control voltage (U_{S}) in the form of an AC voltage for the piezo element (3) which, on the basis of the control voltage (U_{S}), generates and emits a measurement signal (U_{RS}), the switching regulator (10) comprising a voltage supply (5), an evaluation and control unit (12), two changeover units (16, 18) and an inductor coil (DR1), either the voltage supply (5) or the piezo element (3) being connected to the inductor coil (DR1) via the changeover units (16, 18), a compensation inductance (20) for receiving operation being arranged in parallel with the piezo element (3), a receiving amplifier (30) amplifying an echo signal (U_{RE}) received in response to the measurement signal (U_{RS}) and outputting it as an output signal (Uₒᵤₜ).

2. Ultrasonic transducer according to Claim 1,
**characterized in that**
the compensation inductance (20) is in the form of a coil which provides a required inductance value for compensating for parasitic capacitances (C_{P}) in the piezo element (3).

3. Ultrasonic transducer according to Claim 1,
**characterized in that**
the compensation inductance is in the form of a gyrator unit (20) which simulates a required inductance value for compensating for parasitic capacitances (C_{P}) in the piezo element (3) from a reference capacitance (C_{LP}).

4. Ultrasonic transducer according to Claim 3,
**characterized in that**
the gyrator unit (20) comprises a negative impedance converter (22) having two outer nonreactive resistors (R_{LP}, R) and a reference capacitance (C_{LP}), the value of which is converted by the negative impedance converter (22) into a corresponding inductance value by means of phase shifting.

5. Ultrasonic transducer according to one of the preceding Claims 1 to 4,
**characterized in that**
the changeover units (16, 18) are each in the form of a semiconductor circuit having two switching transistors (Q1, Q11, Q2, Q22).

6. Ultrasonic transducer according to Claim 5,
**characterized in that**
a logic unit (14) connects the inductor coil (DR1) to a supply voltage (U_{SUP}) at a first connection (S2) and to earth (GND) at a second connection (S1) by changing over the two changeover units (16, 18) in order to store energy in the inductor coil (DR1), the logic unit (14) changing over the first changeover unit (16) to the starting position again in order to supply the piezo element (3) with a positive control voltage (U_{S}) or changing over the second changeover unit (18) to the starting position again in order to supply the piezo element (3) with a negative control voltage (U_{S}).

7. Ultrasonic transducer according to Claim 6,
**characterized in that**
the logic unit (14) controls the first changeover unit (16) with a first clock signal (U_{T1}) in order to generate a positive voltage component of the control voltage (U_{S}).

8. Ultrasonic transducer according to Claim 6,
**characterized in that**
the logic unit (14) controls the second changeover unit (18) with a second clock signal (U_{T2}) in order to generate a negative voltage component of the control voltage (U_{S}).

9. Ultrasonic transducer according to Claim 7 or 8,
**characterized in that**
the logic unit (14) sets the level of the negative or positive voltage component of the control voltage (U_{S}) via the duty ratio of the two clock signals (U_{T1}, U_{T2}).

10. Apparatus for sensing the environment in a vehicle, having at least one ultrasonic transducer (1) and an evaluation unit, the at least one ultrasonic transducer (1) emitting a measurement signal (U_{RS}) and receiving at least one echo signal (U_{RE}) in response to the measurement signal (U_{RS}), which echo signal is evaluated by the evaluation unit in order to detect objects,
**characterized in that**
the ultrasonic transducer (1) is configured according to one of Claims 1 to 9.

## Revendications

1. Transducteur à ultrasons comportant un élément piézoélectrique (3) et un régulateur de commutation (10) pour générer une tension de commande (U_{S}) en tant que tension alternative destinée à l'élément piézoélectrique (3), qui génère et émet un signal de mesure (U_{RS}) en fonction de la tension de commande (U_{S}), dans lequel le régulateur de commutation (10) comprend une alimentation en tension (5), une unité d'évaluation et de commande (12), deux unités de commutation (16, 18) et une bobine de réactance (DR1), dans lequel l'alimentation en tension (5) ou l'élément piézoélectrique (3) est relié à la bobine de réactance (DR1) par l'intermédiaire des unités de commutation (16, 18), dans lequel une inductance de compensation (20) est disposée en parallèle à l'élément piézoélectrique (3) pour un mode de réception, dans lequel un amplificateur de réception (30) amplifie un signal d'écho (U_{RE}) reçu en réaction au signal de mesure (U_{RS}) et le délivre en tant que signal de sortie (Uₒᵤt).

2. Transducteur à ultrasons selon la revendication 1,
**caractérisé en ce que** l'inductance de compensation (20) est réalisée sous la forme d'une bobine qui fournit une valeur d'inductance nécessaire pour la compensation de capacités parasites (C_{P}) dans l'élément piézoélectrique (3).

3. Transducteur à ultrasons selon la revendication 1,
**caractérisé en ce que** l'inductance de compensation est réalisée sous la forme d'une unité à gyrateur (20) qui reproduit une valeur d'inductance nécessaire pour la compensation de capacités parasites (C_{P}) dans l'élément piézoélectrique (3), à partir d'une capacité de référence (C_{LP}).

4. Transducteur à ultrasons selon la revendication 3,
**caractérisé en ce que** l'unité à gyrateur (20) comprend un convertisseur d'impédance négatif (22) muni de deux résistances ohmiques externes (R_{LP}, R) et d'une inductance de référence (C_{LP}), dont la valeur est convertie par déphasage par le convertisseur d'impédance négatif (22) en une valeur d'inductance correspondante.

5. Transducteur à ultrasons selon l'une quelconque des revendications 1 à 4 précédentes,
**caractérisé en ce que** les unités de commutation (16, 18) sont respectivement réalisées sous la forme d'un circuit à semi-conducteur comportant deux transistors de commutation (Q1, Q11, Q2, Q22).

6. Transducteur à ultrasons selon la revendication 5,
**caractérisé en ce qu'**une unité logique (14) relie, par commutation des deux unités de commutation (16, 18), la bobine d'inductance (DR1), sur une première borne (S2), à une tension d'alimentation (U_{SUP}) et, sur une deuxième borne (S1), à la masse (GND), afin de stocker de l'énergie dans la bobine d'inductance (DR1), dans lequel l'unité logique (14) commute de nouveau la première unité de commutation (16) en position de sortie afin d'alimenter l'élément piézoélectrique (3) avec une tension de commande positive (U_{S}) ou commute de nouveau la deuxième unité de commutation (18) en position de sortie afin d'alimenter l'élément piézoélectrique (3) avec une tension de commande négative (U_{S}).

7. Transducteur à ultrasons selon la revendication 6,
**caractérisé en ce que** l'unité logique (14) commande la première unité de commutation (16) au moyen d'un premier signal d'horloge (U_{T1}) pour générer une fraction de tension positive de la tension de commande (U_{S}).

8. Transducteur à ultrasons selon la revendication 6,
**caractérisé en ce que** l'unité logique (14) commande la deuxième unité de commutation (18) avec un deuxième signal d'horloge (U_{T2}) pour générer une fraction de tension négative de la tension de commande (U_{S}).

9. Transducteur à ultrasons selon la revendication 7 ou 8,
**caractérisé en ce que** l'unité logique (14) règle la valeur de la fraction de tension négative ou positive de la tension de commande (U_{S}) au moyen du rapport cyclique des deux signaux d'horloge (U_{T1}, U_{T2}).

10. Dispositif de détection de l'environnement dans un véhicule comportant au moins un transducteur à ultrasons (1) et une unité d'évaluation, dans lequel l'au moins un transducteur à ultrasons (1) émet un signal de mesure (U_{RS}) et reçoit, en réaction au signal de mesure (U_{RS}), au moins un signal d'écho (U_{RE}) qui est évalué par l'unité d'évaluation pour la détection d'objets,
**caractérisé en ce que** le transducteur à ultrasons (1) est réalisé conformément à l'une des revendications 1 à 9.
